# EUROPÄISCHE PATENTSCHRIFT

(11) **EP 1 441 168 B1**
(45) Veröffentlichungstag und Bekanntmachung des Hinweises auf die Patenterteilung: **26.10.2005**
(21) Anmeldenummer: 04001238.7
(22) Anmeldetag: 21.01.2004
(51) Int. Cl.: F16L 41/06, F16L 47/34

(54) **Ventil-Anbohrarmatur**
Tapping device with valve
Appareil de perçage avec vanne

(30) Priorität: 24.01.2003 DE 10302917
(43) Veröffentlichungstag der Anmeldung: 28.07.2004
(73) Patentinhaber: Friatec Aktiengesellschaft, 68229 Mannheim (DE)
(72) Erfinder: Fastanz, Mathias, 68309 Mannheim (DE); Kehl, Torsten, 64683 Einhausen (DE); Schmitt, Harald, 68309 Mannheim (DE); Ehrhardt, Peter, 68549 Ilvesheim (DE)
(74) Vertreter: Tönhardt, Marion

(56) Entgegenhaltungen:
- DE-A- 4 217 982
- DE-A- 19 641 803
- US-A- 5 105 844

## Beschreibung

Die Erfindung betrifft eine Ventil-Anbohrarmatur, mit einem Gehäuse, welches mit einer Rohrleitung verbindbar ist und das einen Ventilstutzen und einen in diesen mündenden Abzweigstutzen aufweist, wobei in dem Ventilstutzen ein Ventilkörper und ein Werkzeug zum Auftrennen der Rohrleitung mittels einer mit diesen drehfest verbundenen Spindel axial verschiebbar angeordnet sind, und mit einer Ventilbuchse in dem Ventilstutzen, in die ein Führungsring axial fest eingesetzt ist, wobei die Spindel den Führungsring durchsetzt.

Eine solche Ventil-Anbohrarmatur ist aus der DE 42 17 982 C2 bekannt. Die Ventilbuchse ist dabei mit einem Innengewinde versehen, welches sich im wesentlichen über ihre gesamte Höhe erstreckt und in welches das Werkzeug mit einem Außengewinde eingreift und so geführt wird. Diese Gewinde sind in der praktischen Ausgestaltung Feingewinde, um das Drehmoment beim Auftrennen des Rohres so gering wie möglich zu halten, trotzdem zeigt dieses technische Konzept ein hohes Anbohrmoment. Infolge des Feingewindes fordert der Bohrvorgang weiterhin eine große Anzahl von Drehungen.

Eine weitere Ventil-Anbohrarmatur ist aus der EP 1 035 367 B1 bekannt. Hier sind der Ventilkörper und das Werkzeug zueinander verdrehbar angeordnet. Der Ventilkörper, der eine mit dem Werkzeug drehfeste, aber axial verschiebbare Spindel fast völlig umgibt, ist mit einem Gewinde zur Aufnahme der Spindel versehen, so daß bei Drehung der Spindel das Werkzeug eine kombinierte Dreh- und Translationsbewegung, der Ventilkörper aber nur eine reine lineare Bewegung ausführt. Während bei der DE 42 17 982 C2 das Gewinde der Ventilbuchse für die Führung des Werkzeuges sorgt, geschieht dies bei der EP 1 035 367 B1 im wesentlichen durch die Ausgestaltung des ansonsten gewindefreien Gehäuses.

Seit langem sind mehrgängige Spindelantriebe bekannt, ein Beispiel zeigt die DE 35 02 523 A1. Sie werden in der Regel dann eingesetzt, wenn bei einer Umdrehung der Spindel große axiale Bewegungen verlangt werden. Bei einer Ventil-Anbohrarmartur sind sie bisher allerdings nicht verwendet worden, weil das Problem der Führung des Werkzeuges zum Auftrennen der Bohrleitung nicht befriedigend gelöst werden kann.

Es ist die Aufgabe der vorliegenden Erfindung, die Ventil-Anbohrarmatur der eingangs genannten Gattung so auszugestalten, daß die Nachteile eines Feingewindes, insbesondere hohes Anbohrmoment und hohe Umdrehungszahl vermieden werden.

Diese Aufgabe wird durch eine Ventil-Anbohrarmatur nach Anspruch 1 gelöst. Vorteilhafte Ausgestaltungen sind Gegenstand der Unteransprüche.

Erfindungsgemäß ist vorgesehen, daß die Spindel ein mehrgängiges Gewinde aufweist, das in ein entsprechend gestaltetes Innengewinde des Führungsringes greift, und daß mindestens eine in Axialrichtung der Spindel verlaufende Nut vorgesehen ist und in jede Nut ein im Ventilstutzen direkt oder indirekt festgehaltener Führungsstift kraftschlüssig greift. Durch diese Ausgestaltung kann das Feingewinde sowohl am Werkzeug als auch in der Führungsbuchse entfallen. Der oder die Führungsstifte wirken dabei als Mitnehmer, die erst die kombinierte rotatorische und translatorische Bewegung ermöglichen.

Bevorzugt erstreckt sich das mehrgängige Gewinde über die gesamte Länge der Spindel.

Weiter bevorzugt ist in die Ventilbuchse ein Ringkörper eingesetzt, in dessen Ringraum der mindestens eine Führungsstift festgelegt ist, wobei vorgesehen sein kann, daß der Führungsstift in eine Nut im Ringraum des Ringkörpers gepreßt ist. Bei der praktischen Ausgestaltung werden zweckmäßigerweise zwei einander diametral gegenüberliegende Nuten an der Spindel und entsprechend zwei Führungsstifte vorgesehen sein.

Nach einer Ausgestaltung ist der Ringkörper einstückig mit einem Betätigungsansatz für die Drehbewegung der Spindel ausgebildet.

Der Führungsring, der auch als oberer Endanschlag für das Werkzeug dient, kann dazu in axialer Richtung zum Ringkörper aufragende Anschlagstifte aufweisen, die gegebenenfalls eine gerundete Auflagefläche haben können.

Durch das mehrgängige Gewinde auf der Spindel wird die Anzahl der Umdrehungen für den Bohrvorgang reduziert, bei Gangzahlen von drei oder vier beispielsweise um etwa ein Fünftel. Da bei n Gewindegängen über jeden Gewindegang 1/n der Kraft übertragen wird, reduziert sich das Anbohrmoment aufgrund der geringeren Gewindereibung und Steigung der Gewindespindel. Insgesamt wird eine Ventil-Anbohrarmatur zur Verfügung gestellt, zu deren sicherer Funktion das Feingewinde der Ventilhülse nicht mehr erforderlich ist.

Im folgenden soll die Erfindung lediglich beispielhaft anhand der beigefügten Zeichnungen näher erläutert werden. Es zeigt:
- Figur 1: eine Schnittansicht durch die Ventil-Anbohrarmatur gemäß der vorliegenden Erfindung im geöffneten Zustand;
- Figur 2: eine perspektivische Ansicht eines Führungsringes, wie er bei der vorliegenden Erfindung eingesetzt wird;
- Figur 3: eine perspektivische Ansicht einer Spindel gemäß der vorliegenden Erfindung;
- Figur 4: einen Ringkörper mit Betätigungsansatz für die Drehbewegung der Spindel; und.
- Figur 5: eine Draufsicht auf die offene Seite des Ringkörpers mit Führungsstiften.

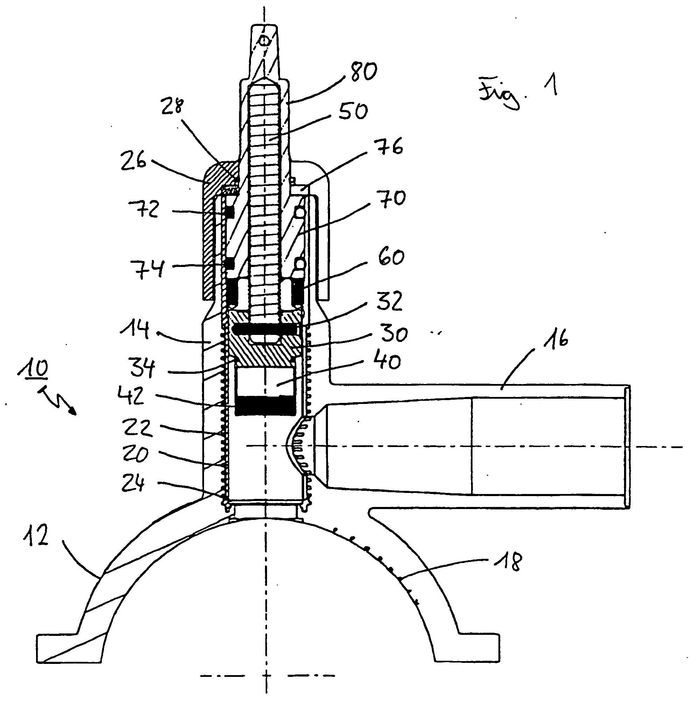

Figur 1 zeigt einen Schnitt durch eine Ausführungsform einer Ventil-Anbohrarmatur der vorliegenden Erfindung. Sie weist ein Gehäuse 10 aus Kunststoff mit einem Ventilstutzen 14 auf, in den ein Abzweigstutzen 16 zum Anschluß einer Abzweigleitung mündet. Das Gehäuse 10 weist weiter, einem Rohr zugewandt, einen Sattel 12 auf, in dessen Innenfläche eine Heizwicklung 18 angeordnet ist. Diese Heizwicklung 18 liegt in bekannter Weise konzentrisch zur Achse des Ventilstutzens 14. Zusammen mit einer nicht dargestellten Unterschelle ist der Sattel 12 mittels Schrauben auf der Außenfläche eines Rohres zu befestigen, wobei mit Hilfe der Heizwicklung 18 eine dichte Verbindung mit dem Rohr erfolgt.

In den Ventilstutzen 14 ist eine Ventilbuchse 20 integriert, welche radial außen Verankerungsstege 22, beispielsweise in Form von radial von der Außenfläche der Ventilbuchse 20 vorstehenden Ringen oder dergleichen, aufweist, die bei der Herstellung des Gehäuses 10 mit Kunststoff umspritzt werden und somit für die funktionssichere Einbettung der Ventilbuchse 20 sorgen. Aufgrund solcher ringförmigen Verankerungsstege 22 sowie dem zwischen diesen vorhandenen Kunststoff wird eine Abdichtung gewährleistet, so daß Medium nicht zwischen die Außenfläche der Ventilbuchse 20 und den Kunststoff des Ventilstutzens 14 kriechen und entweichen kann.

Die Ventilbuchse 20 erstreckt sich über einen wesentlichen Teil der Gesamthöhe des Ventilstutzens 14 und weist im Bereich des Abzweigstutzens 16 eine Öffnung auf. An ihrem unteren Ende erstreckt sie sich praktisch bis in den Sattel 12 in unmittelbarer Nähe der Außenfläche des Rohres, wo in die Ventilbuchse 20 ein Ventilsitz 24 integriert ist.

Der Ventilstutzen 14 ist an seinem oberen freien Ende mittels einer Kappe 26 verschlossen, durch die eine Spindel 50 geführt ist. Zur Abdichtung dieser axial verlagerbaren Spindel 50 ist diese von einem Ringkörper 70 umgeben, welcher in den Ventilstutzen 14 eingesetzt ist. Der Ringkörper 70 enthält zur Abdichtung gegenüber dem Ventilstutzen 14 außen wenigstens eine, zweckmäßig zwei Dichtungen 72, 74, die jeweils in einer Ringnut angeordnet sind. Einstückig mit dem Ringkörper 70 verbunden ist ein Betätitungsansatz 80 für die Drehbewegung der Spindel 50, der in üblicher Weise als Vierkant ausgebildet sein kann. Ein weiterer Dichtring 28 liegt über einem Flansch 76 des Ringkörpers 70.

Der Ringkörper 70 mit dem Betätigungsansatz 80 ist hohlzylindrisch ausgebildet, wobei die Spindel 50 in diesem Hohlraum einliegt. Die Spindel 50, die weiter unten noch näher beschrieben wird, durchsetzt einen Führungsring 60, der in den Ventilstutzen 14 fest eingesetzt ist, beispielsweise mit diesem verschraubt ist. Am dem Sattel 12 zugewandten Ende der Spindel 50 sind ein Ventilkörper 30 und ein Werkzeug 40, beispielsweise ein Bohrer, drehfest mittels eines den Ventilkörper 30 und die Spindel 50 durchsetzenden Stiftes 32 festgelegt. Ein Dichtring 34 unterhalb des Ventilkörpers 30 sorgt in geschlossenem Zustand der Ventil-Anbohrarmatur für den mediumdichten Abschluß auf dem Ventilsitz 24. Das Werkzeug 40 weist auf bekannte Weise eine Schneidkante 42 auf.

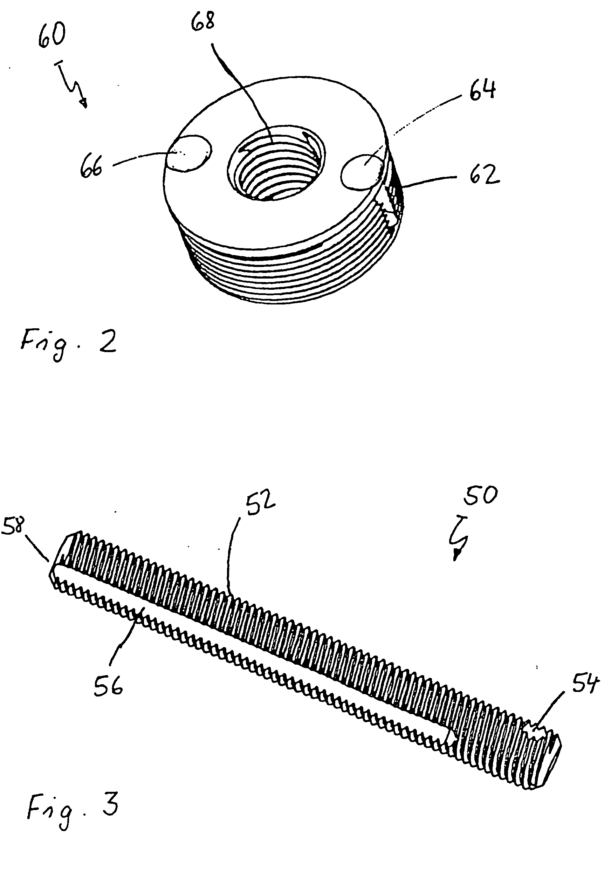

Figur 2 zeigt den Führungsring 60, der mittels eines Außengewindes 62 in den Ventilstutzen 14 (Figur 1) eingeschraubt wird. Im Bereich des Außengewindes 2 sind zwei einander diametral gegenüberliegende Anschlagstifte 64, 66 in Nuten untergebracht, die gegebenenfalls an ihrem freiliegenden Ende abgerundete Auflageflächen haben können. Der Führungsring 60 weist weiterhin ein mehrgängiges, beispielsweise drei- oder viergängiges, Innengewinde 68 auf, das dem mehrgängigen Gewinde der Spindel entspricht.

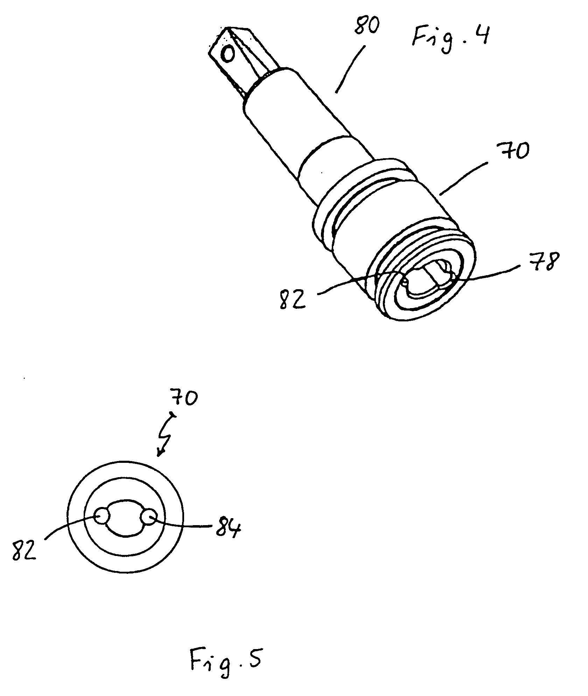

Figur 3 zeigt eine perspektivische Ansicht einer Spindel 50, wie sie bei der vorliegenden Erfindung zum Einsatz kommt. Im dargestellten Ausführungsbeispiel ist die Spindel 50 mit einem viergängigen Außengewinde 52 versehen, das sich im wesentlichen über die gesamte Länge der Spindel 50 erstreckt. Am im Einbauzustand dem Sattel 12 (Figur 1) zugewandten Ende der Spindel 50 ist eine Bohrung 54 angebracht, durch die der Stift 32 (Figur 1) zur Sicherung des Ventilkörpers 30 bzw. des Werkzeuges 40 geführt wird. Zwei einander diametral gegenüberliegende Längsnuten, von denen in der perspektivischen Darstellung nur die Nut 56 zu sehen ist, durchsetzen das Gewinde 52 und münden in die Endfläche 58 der Spindel 50, die der Bohrung gegenüberliegt. Die Längsnuten sind ein Teil der Führung der Spindel 50.

Figur 4 zeigt in perspektivischer Darstellung den Ringkörper 70 mit daran angebrachtem Betätigungsansatz 80. Im hohlzylindrischen Innenraum des Ringkörpers 70 sind einander diametral gegenüberliegende Nuten 78, 82 angebracht, die sich fast über die gesamte Länge des Ringkörpers 70 erstrecken. Diese Nuten 78, 82 sind im Querschnitt so ausgebildet, daß sie Führungsstifte 84, 86 im Preßsitz, wie dies in der schematischen Draufsicht des offenen Endes des Ringkörpers 70 in Figur 5 erkennbar ist. Der freiliegende Querschnitt der Führungsstifte 84, 86 ist so gestaltet, daß er kraftschlüssig in die Längsnuten 56 der Spindel 50 (Figur 3) ragt.

Wenn nun die Spindel 50 gedreht wird, übernimmt einerseits das Innengewinde 68 des Führungsringes 60 (Figur 2) die Führungsfunktion für den Bohrvorgang, andererseits sorgen die in die Längsnuten 56 greifenden Führungsstifte 84, 86 dafür, daß ein aufwendiges Feingewinde im Ventilstutzen 14 unnötig wird.

### BEZUGSZEICHENLISTE

- 10: Gehäuse
- 12: Sattel
- 14: Ventilstutzen
- 16: Abzweigstutzen
- 18: Heizwicklung
- 20: Ventilbuchse
- 22: Verankerungssteg
- 24: Ventilsitz
- 26: Kappe
- 28: Dichtring
- 30: Ventilkörper
- 32: Stift
- 34: Dichtring
- 40: Werkzeug
- 42: Schneidkante
- 50: Spindel
- 52: mehrgängiges Gewinde
- 54: Bohrung
- 56: Nut
- 58: Endfläche
- 60: Führungsring
- 62: Außengewinde
- 64: Anschlagstift
- 66: Anschlagstift
- 68: Innengewinde
- 70: Ringkörper
- 72: Dichtung
- 74: Dichtung
- 76: Flansch
- 78: Nut
- 80: Betätigungsansatz
- 82: Nut
- 84: Führungsstift
- 86: Führungsstift

## Patentansprüche

1. Ventil-Anbohrarmatur, mit einem Gehäuse (10), welches mit einer Rohrleitung verbindbar ist und das einen Ventilstutzen (14) und einen in diesen mündenden Abzweigstutzen (16) aufweist, wobei in dem Ventilstutzen (14) ein Ventilkörper (30) und ein Werkzeug (40) zum Auftrennen der Rohrleitung mittels einer mit diesen drehfest verbundenen Spindel (50) axial verschiebbar angeordnet sind, und mit einer Ventilbuchse (20) in dem Ventilstutzen (14), in die ein Führungsring (60) axial fest eingesetzt ist, wobei die Spindel (50) den Führungsring (60) durchsetzt, **dadurch gekennzeichnet, daß** die Spindel (50) ein mehrgängiges Gewinde (52) aufweist, das in ein entsprechend gestaltetes Innengewinde (68) des Führungsringes (60) greift, und daß mindestens eine in Axialrichtung der Spindel (50) verlaufende Nut (56) vorgesehen ist und in jede Nut (56) ein im Ventilstutzen (14) direkt oder indirekt festgehaltener Führungsstift (84, 86) kraftschlüssig greift.

2. Ventil-Anbohrarmatur nach Anspruch 1, **dadurch gekennzeichnet, daß** das mehrgängige Gewinde (52) sich im wesentlichen über die gesamte Länge der Spindel (50) erstreckt.

3. Ventil-Anbohrarmatur nach Anspruch 1 oder 2, **dadurch gekennzeichnet, daß** in die Ventilbuchse (20) ein Ringkörper (70) eingesetzt ist, in dessen Ringraum der mindestens eine Führungsstift (84, 86) festgelegt ist.

4. Ventil-Anbohrarmatur nach Anspruch 3, **dadurch gekennzeichnet, daß** der mindestens eine Führungsstift (84, 86) in eine Nut (78, 82) im Ringraum des Ringkörpers (70) gepreßt ist.

5. Ventil-Anbohrarmatur nach einem der Ansprüche 1 bis 4, **dadurch gekennzeichnet, daß** der Ringkörper (70) einstückig mit einem Betätigungsansatz (80) für die Drehbewegung der Spindel (50) ausgebildet ist.

6. Ventil-Abohrarmatur nach einem der Ansprüche 1 bis 5, **dadurch gekennzeichnet, daß** der Führungsring (60) in axialer Richtung zum Ringkörper (70) aufragende Anschlagstifte (64, 66) aufweist.

7. Ventil-Anbohrarmatur nach Anspruch 6, **dadurch gekennzeichnet, daß** die Anschlagstifte (64, 66) eine gerundete Auflagefläche haben.

8. Ventil-Anbohrarmatur nach einem der Ansprüche 1 bis 7, **dadurch gekennzeichnet, daß** in einem sich an den Ventilstutzen (14) anschließenden Sattel 12 eine Heizwicklung (18) angebracht ist, mittels derer der Sattel (12) mit der Rohrleitung verbindbar ist.

## Claims

1. Valve tapping fixture, with a housing (10) which is connectable to a pipeline and which has a valve nipple (14) and a branch-off nipple (16) issuing into the latter, the valve nipple (14) having arranged axially displaceably in it a valve body (30) and a tool (40) for severing the pipeline by means of a spindle (50) connected fixedly in terms of rotation to said valve body and the said tool, and, in the valve nipple (14), with a valve bush (20), into which a guide ring (60) is inserted axially fixedly, the spindle (50) passing through the guide ring (60), **characterized in that** the spindle (50) has a multi-flight thread (52) which engages into a correspondingly configured internal thread (68) of the guide ring (60), and **in that** at least one groove (56) running in the axial direction of the spindle (50) is provided, and a guide pin (84, 86) retained directly or indirectly in the valve nipple (14) engages non-positively into each groove (56).

2. Valve tapping fixture according to Claim 1, **characterized in that** the multi-flight thread (52) extends essentially over the entire length of the spindle (50).

3. Valve tapping fixture according to Claim 1 or 2, **characterized in that** the valve bush (20) has inserted into it an annular body (70), in the annular space of which the at least one guide pin (84, 86) is secured.

4. Valve tapping fixture according to Claim 3, **characterized in that** the at least one guide pin (84, 86) is pressed into a groove (78, 82) in the annular space of the annular body (70).

5. Valve tapping fixture according to one of Claims 1 to 4, **characterized in that** the annular body (70) is produced in one piece with an actuating extension (80) for the rotational movement of the spindle (50).

6. Valve tapping fixture according to one of Claims 1 to 5, **characterized in that** the guide ring (60) has stop pins (64, 66) projecting upwards in the axial direction towards the annular body (70).

7. Valve tapping fixture according to Claim 6, **characterized in that** the stop pins (64, 66) have a rounded bearing surface.

8. Valve tapping fixture according to one of Claims 1 to 7, **characterized in that** a saddle (12) adjoining the valve nipple (14) has mounted in it a heating coil (18), by means of which the saddle (12) is connectable to the pipeline.

## Revendications

1. Dispositif de perçage avec vanne comprenant un carter (10) qui peut être relié à une canalisation et qui présente un manchon de vanne (14) dans lequel débouche un manchon de dérivation (16), un corps de vanne (30) et un outil (40) pour perforer la canalisation au moyen d'une broche (50) raccordée audit outil de manière résistante à la torsion t étant disposés dans ledit manchon de vanne (14) de manière à pouvoir être déplacés axialement, et, dans le manchon de vanne (14), une douille de vanne (20) dans laquelle est intégrée axialement et de manière fixe, une bague de guidage (60), la broche (50) traversant la bague de guidage (60),
**caractérisé en ce que** la broche (50) présente un filetage multiple (52) qui s'engage dans un filetage femelle (68) correspondant de la bague de guidage (60) et **en ce qu'**il est prévu au moins une rainure (56) qui s'étend dans le sens axial de la broche (50) et que un goujon de guidage (84, 86), fixé de manière directe ou indirecte dans le manchon de vanne (14) s'engage en force dans chaque rainure (56).

2. Dispositif de perçage avec vanne selon la revendication 1, **caractérisé en ce que** le filetage multiple (52) s'étend sensiblement sur toute la longueur de la broche (50).

3. Dispositif de perçage avec vanne selon l'une des revendications 1 ou 2, **caractérisé en ce qu'**un corps annulaire (70), dans l'espace annulaire duquel est fixé au moins un goujon de guidage (84, 86), est inséré dans la douille de vanne (20).

4. Dispositif de perçage avec vanne selon la revendication 3, **caractérisé en ce que** ledit au moins un goujon de guidage (84, 86) est pressé dans une rainure (78, 82) de l'espace annulaire du corps annulaire (70).

5. Dispositif de perçage avec vanne selon l'une des revendications 1 à 4, **caractérisé en ce que** le corps annulaire (70) est formé d'un seul tenant avec une rallonge d'actionnement (80) pour le mouvement de rotation de la broche (50).

6. Dispositif de perçage avec vanne selon l'une des revendications 1 à 5, **caractérisé en ce que** la bague de guidage (60) présente des goujons de fixation (64, 66) saillants en direction axiale par rapport au corps annulaire (70).

7. Dispositif de perçage avec vanne selon la revendication 6, **caractérisé en ce que** les goujons de fixation (64, 66) ont une surface de contact arrondie.

8. Dispositif de perçage avec vanne selon l'une quelconque des revendications 1 à 7, **caractérisé en ce que**, dans un siège (12) se raccordant au manchon de vanne (14), est monté un enroulement chauffant (18) au moyen duquel le siège (12) peut être raccordé à la canalisation.
